# EUROPEAN PATENT APPLICATION

(11) **EP 4 439 812 A1**
(43) Date of publication of application: **02.10.2024**
(21) Application number: 22912035.7
(22) Date of filing: 23.12.2022
(51) Int. Cl.: H01M 50/126, H01M 50/105, H01M 50/131, H01M 50/20

(54) **POUCH FILM LAMINATE AND BATTERY CASE MANUFACTURED USING SAME**

(30) Priority: 24.12.2021 KR 20210187273
(71) Applicant: LG Energy Solution, Ltd., Seoul 07335 (KR)
(72) Inventor: KANG, Min Hyeong, Daejeon 34122 (KR); KIM, Sang Hun, Daejeon 34122 (KR); YU, Hyung Kyun, Daejeon 34122 (KR); HWANG, Soo Ji, Daejeon 34122 (KR); SONG, Dae Woong, Daejeon 34122 (KR); LIM, Hun Hee, Daejeon 34122 (KR)
(74) Representative: Plasseraud IP
(86) International application number: PCT/KR2022/021223
(87) International publication number: WO 2023/121402

(57) **Abstract**

The present invention relates to a pouch film laminate body capable of manufacturing a high-strength battery case with excellent resistance to external stress and a battery case manufactured using the same, and the pouch film laminate body of the present invention includes a gas barrier layer having a thickness of 60 um or greater, a base layer disposed on one surface of the gas barrier layer and having a tensile strength of 10 kgf/15 mm to 20 kgf/15 mm in a TD direction and an elongation of 150% to 235% in the TD direction, and a sealant layer disposed on the other surface of the gas barrier layer.

## Description

### TECHNICAL FIELD

This application claims the benefit of Korean Patent Application No. 10-2021-0187273, filed on December 24, 2021, in the Korean Intellectual Property Office, the disclosure of which is incorporated herein in its entirety by reference.

The present invention relates to a pouch film laminate body and a battery case manufactured using the same, and more specifically, to a pouch film laminate body capable of manufacturing a high-strength battery case with less cracking caused by external stress, and a battery case manufactured using the same.

### BACKGROUND ART

A secondary battery is applied and used in small products such as digital cameras, P-DVDs, MP3P, mobile phones, PDAs, portable game devices, power tools, and e-bikes, as well as large products that require high power such as electric vehicles and hybrid vehicles, and power storage devices for storing surplus generated power or renewable energy, and power storage devices for backup power.

Typically, a secondary battery is manufactured by applying an electrode active material slurry on a positive electrode current collector and a negative electrode current collector to manufacture a positive electrode and a negative electrode, stacking the positive electrode and the negative electrode on both sides of a separator to form an electrode assembly having a predetermined shape, and then accommodating the electrode assembly in a battery case, followed by injecting an electrolyte thereinto and sealing the case.

The secondary battery is classified into a pouch-type secondary battery, and a can-type secondary battery according to the material of the case accommodating the electrode assembly. The pouch-type secondary battery accommodates the electrode assembly in a pouch made of a flexible polymer material. Also, the can-type secondary battery accommodates the electrode assembly in a case made of a material such as a metal or plastic.

The pouch-type battery case is manufactured by performing press processing on a flexible pouch film laminate body, thereby forming a cup portion. Then, when the cup portion is formed, an electrode assembly is stored in an accommodation space of the cup portion and a sealing portion is sealed to manufacture a secondary battery.

In the press processing, drawing molding is performed by inserting a pouch film into press equipment and applying pressure to a pouch film laminate body with a punch, thereby stretching the pouch film laminate body. The pouch film laminate body is generally formed of a plurality of layers in which a polymer film such as polyethylene terephthalate is laminated on one surface of a gas barrier layer made of a metal, and a sealant layer is laminated on the other surface thereof.

Recently, as the demand for high-capacity batteries such as electric vehicle batteries or ESS batteries increases, the demand for battery cases capable of accommodating more electrode assemblies is increasing. Accordingly, a method for increasing a cup portion molding depth of a pouch-type battery case, or a two-cup molding method for molding a cup portion in each of an upper case and a lower case, thereby increasing a cup portion volume have been attempted. However, when the cup molding depth is increased, or the two-cup molding is performed, the stiffness of the battery case is degraded due to excessive elongation, and as a result, cracks are generated due to stress occurring during a process logistics process or from the outside.

Therefore, there is a demand for the development of a pouch-type battery case with high stiffness while having a large cup volume to increase the accommodation volume for an electrode assembly.

### DISCLOSURE OF THE INVENTION

### TECHNICAL PROBLEM

In order to solve the above problems, the present invention is to provide a pouch film laminate body having excellent stiffness even after a cup portion molding depth is increased by controlling the thickness of a gas barrier layer and the tensile strength and elongation of a base layer to be in specific ranges, or two-cup molding is performed, and a battery case manufactured using the same.

### TECHNICAL SOLUTION

In an aspect, the present invention provides a pouch film laminate body including a gas barrier layer having a thickness of 60 um or greater, a base layer disposed on one surface of the gas barrier layer and having a tensile strength of 10 kgf/15 mm to 20 kgf/15 mm in a TD direction and an elongation of 150% to 235% in the TD direction, and a sealant layer disposed on the other surface of the gas barrier layer.

In the pouch film laminate body according to the present invention, when a force with a load of 100 N and 150 N is repeatedly applied to a sample prepared by subjecting the laminate body to two-cup molding to a molding depth of 9.6 mm, and then cutting the pouch film laminate body to a size of 15 mm× 80 mm, the number of times the force has been applied until breakage occurs may be 2000 times or more.

In addition, in the pouch film laminate body according to the present invention, when a sample prepared by cutting the pouch film laminate body to a size of 90 mm × 100 mm is repeatedly pierced with a 20 N load using a pin having a diameter of 1.0 mm, the number of times the force has been applied until perforation occurs may be 250 times or more.

In addition, in the pouch film laminate body according to the present invention, when a sample prepared by cutting the pouch film laminate body to a size of 90 mm × 100 mm is repeatedly pierced with a 22 N load using a pin having a diameter of 1.0 mm, the number of times the force has been applied until perforation occurs may be 150 times or more.

The gas barrier layer may have a thickness of 60 um to 80 um.

Preferably, the base layer may have a tensile strength of 10 kgf/15 mm to 18 kgf/15 mm in a TD direction, and may have an elongation of 170% to 235% in the TD direction.

The base layer may have a laminate structure of a polyethylene terephthalate film and a nylon film, and at this time, the polyethylene terephthalate film may have a thickness of 5 um to 20 um, and the nylon film may have a thickness of 20 um to 30 µm.

The gas barrier layer may include an aluminum alloy thin film, wherein the aluminum alloy thin film may include 1.2 wt% to 1.7 wt% of iron, and may have a grain size of 10 um to 13 µm.

The sealant layer may have a thickness of 60 um to 100 µm, and may include cast polypropylene, acid-treated polypropylene, a polypropylene-butylene-ethylene copolymer, or a combination thereof.

In another aspect, the present invention provides a battery case manufactured by drawing molding the pouch film laminate body according to the present invention described above.

### ADVANTAGEOUS EFFECTS

A pouch film laminate body according to the present invention, to which a gas barrier layer having a thickness of 60 um or greater, and a base layer having a TD direction tensile strength of 10 kgf/15 mm to 20 kgf/15 mm and a TD direction elongation of 150% to 235% are applied, is not only excellent in moldability, but also has strong resistance to external stress even after molding.

Specifically, when a force with a load of 100 N and 150 N is repeatedly applied to a sample prepared by subjecting the laminate body of the present invention to two-cup molding to a molding depth of 9.6 mm, and then cutting the pouch film laminate body to a size of 15 mm× 80 mm, the number of times the force has been applied until breakage occurs may be 2000 times or more, and when a sample prepared by cutting the pouch film laminate body to a size of 90 mm × 100 mm is repeatedly pierced with a 20 N load using a pin having a diameter of 1.0 mm, the number of times the force has been applied until perforation occurs is 250 times or more, and when repeatedly pierced with a 22 N load, the number of times the force has been applied until perforation occurs is 150 times or more, so that the resistance to external stress is excellent.

Therefore, when the pouch film laminate body of the present invention is used, it is possible to manufacture a battery case which has a large accommodation space of an electrode assembly, and thus is capable of implementing a high energy density, and which is capable of minimizing damage caused by external stress occurring during a logistics process or a charging/discharging process.

### BRIEF DESCRIPTION OF THE DRAWINGS

FIG. 1 is a cross-sectional view of a pouch film laminate body according to an embodiment of the present invention.
FIG. 2 is a view illustrating a battery case according to an embodiment of the present invention.
FIG. 3 is a view illustrating a battery case according to another embodiment of the present invention.
FIG. 4 is a photograph showing a tensile strength measurement apparatus of a base layer.

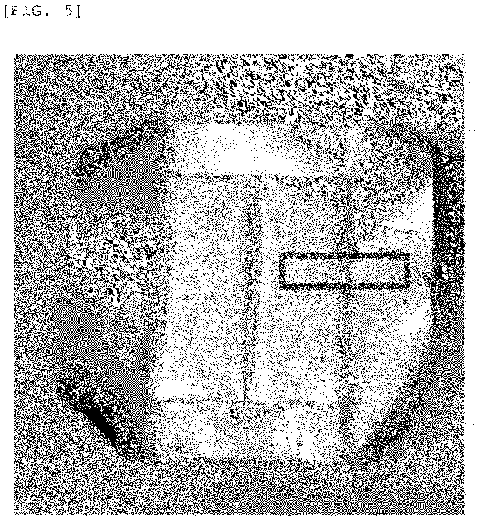

FIG. 5 is a photograph showing a two-cup molded pouch film laminate body and the cutting position of a sample during a fatigue test of the pouch film laminate body.
FIG. 6 is a photograph showing a puncture cycle test apparatus of a pouch film laminate body.

### BEST MODE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present invention, a machine direction (MD) refers to a longitudinal direction of a pouch film laminate body, and a transverse direction (TD) refers to a width direction of the pouch film laminate body.

The inventors of the present invention have repeatedly conducted research to manufacture a battery case which has a large accommodation space of a battery assembly, and thus is capable of implementing a high energy density, and which is capable of suppressing cracks caused by external stress occurring during a logistics process or charging/discharging process, and as a result, have found that the above objective may be achieved by controlling the thickness of a gas barrier layer of a pouch film laminate body and the TD direction tensile strength and elongation of a base layer of the pouch film laminate body to be in specific ranges, and have completed the present invention.

### <Pouch film laminate body>

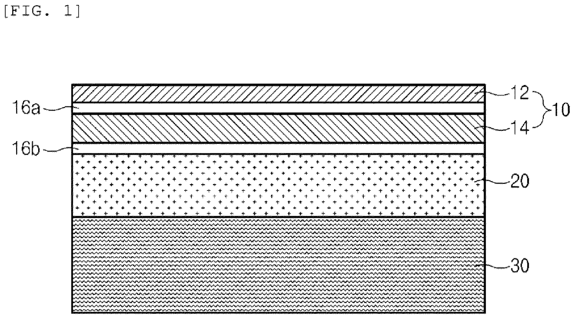

FIG. 1 illustrates an embodiment of a pouch film laminate body according to the present invention. Hereinafter, referring to FIG. 1, the pouch film laminate body according to the present invention will be described.

Referring to FIG. 1, a pouch film laminate body 1 according to the present invention includes a gas barrier layer 20, a base layer 10 disposed on one surface of the gas barrier layer, and a sealant layer 30 disposed on the other surface of the gas barrier layer. At this time, the gas barrier layer 20 may have a thickness of 60 um or greater, preferably 60 um to 100 um, and the base layer 10 may have a TD direction tensile strength of 10 kgf/15 mm to 20 kgf/15 mm, preferably 10 kgf/15 mm to 18 kgf/15 mm, more preferably 10 kgf/15 mm to 15 kgf/15 mm, and even more preferably 10 kgf/15 mm to 13 kgf/15 mm, and a TD elongation of 150% to 235%, preferably 170% to 235%, more preferably 200% to 235%. According to the research of the present inventors, when the thickness of the gas barrier layer 20 and the TD direction tensile strength and elongation of the base layer 10 simultaneously satisfy the above ranges, resistance to external stress after molding is significantly increased while having excellent formability. On the contrary, when one of the thickness of the gas barrier layer or the tensile strength of the base layer is out of the ranges of the present invention, the resistance to external stress after molding is significantly reduced.

Specifically, when a force with a load of 100 N (low force) and 150 N (high force) is repeatedly applied to a sample prepared by subjecting the pouch film laminate body of the present invention to two-cup molding to a molding depth of 9.6 mm, and then cutting the pouch film laminate body to a size of 15 mm × 80 mm, the number of times the force has been applied until breakage occurs is 2000 times or more, preferably 2000 times to 10000 times.

At this time, the sample is cut to include a cup portion, and is cut such that the TD direction of the pouch film laminate body coincides with the longitudinal direction of the sample.

In addition, in the two-cup molding, a pouch film laminate body is inserted into a two-cup molding apparatus, and then a pressure is applied to a partial region of the pouch film laminate body with a punch to form a cup portion, thereby manufacturing a battery case 100. At this time, the pressure may be about 0.3 MPa to about 1 MPa, preferably about 0.3 MPa to about 0.8 MPa, more preferably about 0.4 MPa to about 0.6 MPa. If the pressure is too low during the molding of the cup portion, drawing may be excessive, which may cause wrinkles, and if the pressure is too high, drawing may not be achieved well, which may cause a lower molding depth.

Meanwhile, the movement speed of the punch may be 20 mm/min to 80 mm/min, preferably 30 mm/min to 70 mm/min, more preferably 40 mm/min to 60 mm/min. If the movement speed of the punch is too fast, the circumference surface of the cup portion is not sufficiently stretched, so that a compression force acts, which may cause wrinkles due to buckling, and if the movement speed of the punch is too slow, stress concentrated on a corner of the cup portion during the molding increases, so that pinholes or cracks may increase.

Meanwhile, the mold conditions of the two-cup molding apparatus used in the present invention are as shown in [Table 1] below.

**[Table 1]**

| | | |
|---|---|---|
| Edge curvature (mm) | Punch (corner) | 0.5 (3.5) |
| | Die | 1.0 |
| | Bridge | 1.0 |
| Corner curvature (mm) | Punch | 2.0 |
| | Die | 2.5 |
| Clearance (mm) | Bridge side | 0.35 |
| | Side side | 0.5 |
| Bridge (mm) | Width | 2.0 |
| Size (mm) | Punch | 61×159×2 |
| | Die | 62×160×2 |

In addition, in the pouch film laminate body of the present invention, when a sample prepared by cutting the pouch film laminate body to a size of 90 mm × 100 mm is repeatedly pierced with a 20 N load using a pin having a diameter of 1.0 mm, the number of times the force has been applied until perforation occurs is 250 times or more, and when repeatedly pierced with a 22 N load, the number of times the force has been applied until perforation occurs is 150 times or more. As such, the pouch film laminate body of the present invention is not easily broken or perforated even if a force is repeatedly applied from the outside, and maintains high stiffness even after molding. Therefore, when a battery case is manufactured using the pouch film laminate body of the present invention, it is possible to effectively prevent the battery case from being damaged or broken by external impacts.

Hereinafter, each layer of the pouch film laminate body according to the present invention will be described in detail.

### Base layer

The base layer 10 is disposed on the outermost layer of a battery case to protect an electrode assembly from external impacts and to electrically insulate the electrode assembly.

The base layer 10 may be made of a polymer material, and for example, may be made of a polymer material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon.

The base layer 10 may have a single-layered structure, or may have a multi-layered structure in which different polymer films 12 and 14 are laminated as illustrated in FIG. 1. When the base layer 10 has a multi-layered structure, an adhesive layer 16a may be interposed between the polymer films.

Meanwhile, the base layer 10 may have an overall thickness of 10 um to 60 um, preferably 20 um to 50 um, more preferably 30 um to 50 um. If the base layer has a multi-layered structure, the above thickness is a thickness including an adhesive layer. When the base layer 10 satisfies the above range, durability, insulation, and moldability are excellent. If a base layer is too thin, durability may be reduced, and the base layer may break during a molding process, and if too thick, moldability may be degraded, the overall thickness of the pouch film laminate film may increase, and a battery accommodation space may be reduced, resulting in a decrease in energy density.

In the present invention, the base layer may have a TD direction tensile strength of about 10 kgf/15 mm to about 20 kgf/15 mm, more preferably about 10 kgf/mm to about 18 kgf/mm, more preferably about 10 kgf/15 mm to about 15 kgf/15 mm, and even more preferably about 10 kgf/15 mm to about 13 kgf/15 mm. If the TD direction tensile strength of the base layer is less than 10 kgf/15 mm, the effect of improving fatigue and puncture resistance after cup molding is insignificant. Meanwhile, if the TD direction tensile strength of the base layer is too large, moldability may decrease, so that it is preferable that the TD direction tensile strength of the base layer is 20 kgf/15 mm or less.

Meanwhile, the tensile strength of the base layer is a strength at which breakage occurs when the base layer is stretched in the TD direction, and may be measured by a method in which a film or a film laminate body constituting the base layer is cut such that that the TD direction is the longitudinal to prepare a measurement sample, and then the measurement sample is mounted on a UTM apparatus and stretched to measure the maximum strength at which breakage occurs.

In addition, the base layer may have a TD direction elongation of about 150% to about 235%, preferably 170% to 235%, more preferably 200% to 235%, and even more preferably 210% to 235%. When the TD direction elongation of a base layer satisfies the above range, a gas barrier layer is held well to obtain an effect of improving moldability.

The TD direction tensile strength and elongation of a base layer vary under the influence of the material of a film constituting the base layer, the preparation method of a film, the thickness of a film, the thickness of an adhesive layer, and the like. In addition, since a film preparation process is different for each maker, the physical properties such as tensile strength and elongation of films having the same material and the same thickness may be different depending on a maker. Therefore, the maker (manufacturer) of films constituting a base layer, the material of a film, the thickness of a film, the thickness of an adhesive layer, and the like may be suitably selected to form a base layer having a desired tensile strength and elongation.

According to an embodiment, the base layer 10 may have a laminate structure in which a polyethylene terephthalate (PET) film and a nylon film are laminated with an adhesive layer interposed therebetween. At this time, it is preferable that the nylon film is disposed on the gas barrier layer 20 side, that is, on the inside, and the PolyEthyleneTerephtalate film is disposed on the surface side of the battery case.

polyethylene terephthalate (PET) has excellent durability and electrical insulation, so that when the PET film is disposed on the surface side, durability and insulation properties are excellent. However, since the PET film has weak adhesion with the aluminum alloy thin film constituting the gas barrier layer 20, and has a different stretching behavior, when the PET film is disposed on the gas barrier layer side, de-lamination of the base layer and the gas barrier layer may occur during a molding process, and the gas barrier layer is not uniformly stretched, which may cause a problem in which the moldability is degraded. In comparison, since the nylon film has a similar stretching behavior to that of the aluminum alloy thin film constituting the gas barrier layer 20, when the nylon film is disposed between the polyethylene terephthalate and the gas barrier layer, there may be an effect of improving the moldability.

The polyethylene terephthalate film may have a thickness of 5 um to 20 um, preferably 5 um to 15 um, more preferably 7 um to 15 um, and the nylon film may have a thickness of 20 um to 40 um, preferably 20 um to 35 um, more preferably 20 um to 30 um, and even more preferably 23 um to 27 um. When the thickness of the polyethylene terephthalate film and the thickness of the nylon film satisfy the above ranges, moldability and stiffness after molding are excellent.

### Gas barrier layer

The gas barrier layer 20 is to secure mechanical strength of the battery case, block access of gas, moisture, or the like outside a secondary battery, and prevent leakage of an electrolyte.

The gas barrier layer may have a thickness of 60 um or greater, preferably 60 um to 100 um, more preferably 60 um to 80 um. When the thickness of the gas barrier layer is 60um or greater, the moldability is improved, thereby increasing a limit molding depth, and resistance to external stress after molding is improved.

Meanwhile, the gas barrier layer may be made of a metal material, and may specifically be composed of an aluminum alloy thin film.

The aluminum alloy thin film may include aluminum, and a metal element other than the aluminum, for example, one or two or more selected from the group consisting of iron (Fe), copper (Cu), chromium (Cr), manganese (Mn), nickel (Ni), magnesium (Mg), silicon (Si) and zinc (Zn).

Preferably, the aluminum alloy thin film may have an iron (Fe) content of 1.2 wt% to 1.7 wt%, preferably 1.3 wt% to 1.7 wt%, more preferably 1.3 wt% to 1.45 wt%. When the iron (Fe) content in the aluminum alloy thin film is less than 1.2 wt%, the strength of the aluminum alloy thin film is degraded, which may cause cracks and pinholes during molding, and when greater than 1.7 wt%, the flexibility of the aluminum alloy thin film is reduced, so that there is a limit to improving moldability and bendability.

In addition, the aluminum alloy thin film includes an aluminum alloy thin film having a grain size of 10 um to 13 um, preferably 10.5 um to 12.5 um, more preferably 11 um to 12 um. When the grain size of the aluminum alloy thin film satisfies the above range, a molding depth may be increased without the generation of pinholes or cracks during cup forming. When the grain size of the aluminum alloy thin film is greater than 13 um, the strength of the aluminum alloy thin film is reduced, and more cracks and pinholes are generated due to difficulty in dispersing internal stress during stretching, and when the grain size is less than 10 um, the flexibility of the aluminum alloy thin film is reduced, so that there is a limit to improving moldability and bendability.

The grain size varies depending on a composition of the aluminum alloy thin film and a processing method of the aluminum alloy thin film, and may be measured by observing a cross-section in a thickness direction of the aluminum alloy thin film with a scanning electron microscope (SEM). Specifically, in the present invention, an SEM image of the cross-section in the thickness direction of the aluminum alloy thin film is obtained using a scanning electron microscope, and the maximum diameter of any 30 grains among grains observed in the SEM image is measured, and then the average value thereof is evaluated as a grain size.

Specifically, the aluminum alloy thin film may be an aluminum alloy with the alloy number AA8021, but is not limited thereto.

### Sealant layer

The sealant layer 30 is to be bonded through thermal compression, thereby sealing a battery case, and is positioned in the innermost layer of the pouch film laminate body 1.

The sealant layer 30 is a surface in contact with an electrolyte and an electrode assembly after being molded into the battery case, and thus, is required to have insulation properties and corrosion resistance, and is required to completely seal the inside to block the movement of substances between the inside and the outside, and thus is required to have high sealing properties.

The sealant layer 30 may be made of a polymer material, and for example, may be made of one or more selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisazole, polyarylate, and Teflon, and among the above, it is particularly preferable that polypropylene (PP) is included, which has excellent mechanical properties such as tensile strength, stiffness, surface hardness, abrasion resistance, and heat resistance, and excellent chemical properties such as corrosion resistance.

More specifically, the sealant layer 30 may include polypropylene, cast polypropylene (CPP), acid-modified polypropylene, a polypropylene-butylene-ethylene copolymer, or a combinations thereof.

The sealant layer 30 may have a single-layered structure, or may have a multi-layered structure including two or more layers composed of different polymer materials.

The sealant layer may have a total thickness of 60 um to 100 um, preferably 60 um to 90 um, more preferably 60 um to 80 um. If the sealant layer is too thin, the sealing durability and insulation properties may be reduced, and if too thick, the bendability may be reduced and the total thickness of the pouch film laminate body may increase, resulting in a decrease in energy density relative to volume.

The pouch film laminate body of the present invention as described above may be manufactured through a method for manufacturing a pouch film laminate body, the method known in the art. For example, the pouch film laminate body of the present invention may be manufactured through a method in which the base layer 10 is attached to an upper surface of the gas barrier layer 20 through an adhesive, and then the sealant layer 30 is formed on a lower surface of the gas barrier layer 20 through co-extrusion or an adhesive layer, but is not limited thereto.

The pouch film laminate body according to the present invention may have a total thickness of 160 um to 200 um, preferably 180 um to 200 um. When the thickness of the pouch film laminate body satisfies the above range, it is possible to increase a molding depth while minimizing the reduction in a battery accommodation space, the degradation in sealing durability, and the like due to an increase in the thickness of the pouch laminate body.

### <Battery case>

Next, a battery case according to the present invention will be described.

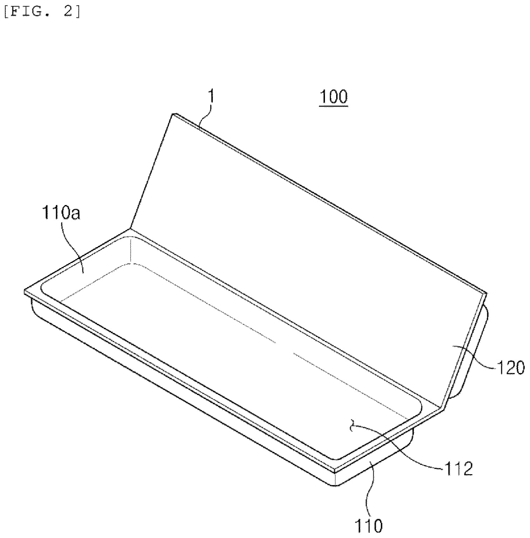

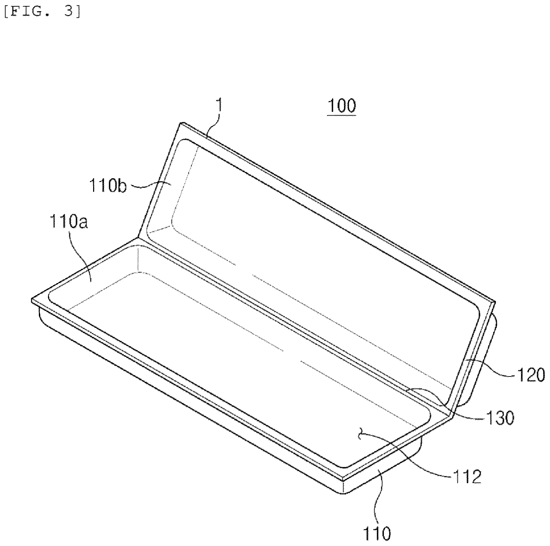

FIG. 2 and FIG. 3 illustrate embodiments of the battery case according to the present invention. Hereinafter, referring to FIG. 2 and FIG. 3, the battery case according to the inventive concept will be described.

As illustrated in FIG. 2 and FIG. 3, the battery case 100 according to the present invention is manufactured by drawing-molding the pouch film laminate body 1 of the present invention described above, and includes at least one cup portion 110a or 110b.

Since the pouch film laminate body 1 is the same as described above, a specific description thereof will be omitted.

The cup portions 110a and 110b are spaces 112 for accommodating an electrode assembly (not shown) and an electrolyte (not shown), and are prepared by drawing-molding the pouch film laminate body 1 using a punch or the like. At this time, the drawing molding may be performed by pressurizing the punch to the side of a sealant layer of the pouch film laminate body 1.

Meanwhile, the battery case 100 according to the present invention may include one cup portion 110a as illustrated in FIG. 2, or two cup portions 110a and 110b as illustrated in FIG. 3.

Meanwhile, the battery case 100 according to the present invention includes a lower case 110 and an upper case 120, and the cup portions 110a and 110b may be formed only in one of the lower case 110 and the upper case 120, or both. When the pouch film laminate body 1 is molded using a one-cup molding apparatus, as illustrated in FIG. 2, it is possible to manufacture a battery case having one cup portion, and when molded using a two-cup molding apparatus, as illustrated in FIG. 3, it is possible to manufacture a battery case in which a cup portion is formed in both the lower case 110 and the upper case 120.

After the electrode assembly is accommodated in the cup portions 110a and 110b, and the electrolyte is injected thereto, the upper case 120 is folded to be placed on an upper end of the lower case 110 such that that the electrode assembly and the electrolyte are blocked from the outside.

Thereafter, edge portions of the upper case 120 and the lower case 110 are thermally compressed to perform a sealing process.

The battery case of the present invention manufactured as described above has a large accommodation space of an electrode assembly, and thus is capable of implementing a high energy density, and is capable of minimizing damage caused by external stress occurring during a logistics process or a charging/discharging process.

### MODE FOR CARRYING OUT THE INVENTION

Hereinafter, the present invention will be described in more detail with reference to specific examples.

### Example 1

On one surface of a AA8021 aluminum (Al) alloy thin film (Manufacturer: SaMa aluminum) having a thickness of 80 um, a nylon film (Product name: Nylon 6, manufacturer: Toray) having a thickness of 25 um and a polyethylene terephthalate (PET) film (Manufacturer: Toray) having a thickness of 12 um were laminated in a dry lamination manner using a urethane adhesive to form a base layer. At this time, the urethane adhesive was applied such that the adhesive layer has a thickness of 5 um. Next, acid-modified polypropylene (PPa) and polypropylene (PP) which are molten on the other surface of the aluminum alloy thin film were each co-extruded to a thickness of 30 um, thereby forming a sealant layer having a thickness of 60 um to manufacture a pouch film laminate body.

### Example 2

On one surface of a AA8021 aluminum (Al) alloy thin film (Manufacturer: SaMa aluminum) having a thickness of 80 um, a nylon film (Product name: Nylon6, manufacturer: Hyosung having a thickness of 25 um and a polyethylene terephthalate (PET) film (Manufacturer: Hyosung) having a thickness of 12 um were laminated in a dry lamination manner using a urethane adhesive to form a base layer. At this time, the urethane adhesive was applied such that the adhesive layer has a thickness of 3 um. Next, polypropylene (PP) molten on the other surface of the aluminum alloy thin film was extruded to a thickness of 30 um, and a cast polypropylene film (CPP) having a thickness of 30 um was combined therewith, thereby forming a sealant layer having a thickness of 60 um to manufacture a pouch film laminate body.

### Example 3

On one surface of a AA8021 aluminum (Al) alloy thin film (Manufacturer: SaMa aluminum) having a thickness of 60 um, a nylon film (Product name: Nylon 6, manufacturer: Toray) having a thickness of 25 um and a polyethylene terephthalate (PET) film (Manufacturer: Toray) having a thickness of 12 um were laminated in a dry lamination manner using a urethane adhesive to form a base layer. At this time, the urethane adhesive was applied such that the adhesive layer has a thickness of 5 um. Next, acid-modified polypropylene (PPa) and polypropylene (PP) which are molten on the other surface of the aluminum alloy thin film were each co-extruded to a thickness of 40 um, thereby forming a sealant layer having a thickness of 80 um to manufacture a pouch film laminate body.

### Example 4

On one surface of a AA8021 aluminum (Al) alloy thin film (Manufacturer: SaMa aluminum) having a thickness of 60 um, a nylon film (Product name: Nylon 6, manufacturer: Hyosung having a thickness of 25 um and a polyethylene terephthalate (PET) film (Manufacturer: Hyosung) having a thickness of 12 um were laminated in a dry lamination manner using a urethane adhesive to form a base layer. At this time, the urethane adhesive was applied such that the adhesive layer has a thickness of 3 um. Next, polypropylene (PP) molten on the other surface of the aluminum alloy thin film was extruded to a thickness of 30 um, and a cast polypropylene film (CPP) having a thickness of 30 um was combined therewith, thereby forming a sealant layer having a thickness of 60 um to manufacture a pouch film laminate body.

### Comparative Example 1

On one surface of a AA8021 aluminum (Al) alloy thin film (Manufacturer: SaMa aluminum) having a thickness of 40 um, a nylon film (Product name: Nylon 6, manufacturer: Hyosung having a thickness of 15 um and a polyethylene terephthalate (PET) film (Manufacturer: Hyosung) having a thickness of 12 um were laminated in a dry lamination manner using a urethane adhesive to form a base layer. At this time, the urethane adhesive was applied such that the adhesive layer has a thickness of 5 um. Next, acid-modified polypropylene (PPa) and polypropylene (PP) which are molten on the other surface of the aluminum alloy thin film were each co-extruded to a thickness of 40 um, thereby forming a sealant layer having a thickness of 80 um to manufacture a pouch film laminate body.

### Comparative Example 2

On one surface of a AA8021 aluminum (Al) alloy thin film (Manufacturer: SaMa aluminum) having a thickness of 60 um, a nylon film (Product name: Nylon 6, manufacturer: Hyosung having a thickness of 15 um and a polyethylene terephthalate (PET) film (Manufacturer: Hyosung) having a thickness of 12 um were laminated in a dry lamination manner using a urethane adhesive to form a base layer. At this time, the urethane adhesive was applied such that the adhesive layer has a thickness of 5 um. Next, acid-modified polypropylene (PPa) and polypropylene (PP) which are molten on the other surface of the aluminum alloy thin film were each co-extruded to a thickness of 40 um, thereby forming a sealant layer having a thickness of 80 um to manufacture a pouch film laminate body.

### Comparative Example 3

On one surface of a AA8021 aluminum (Al) alloy thin film (Manufacturer: SaMa aluminum) having a thickness of 40 um, a nylon film (Product name: Nylon 6, manufacturer: Toray) having a thickness of 25 um and a polyethylene terephthalate (PET) film (Manufacturer: Toray) having a thickness of 12 um were laminated in a dry lamination manner using a urethane adhesive to form a base layer. At this time, the urethane adhesive was applied such that the adhesive layer has a thickness of 5 um. Next, acid-modified polypropylene (PPa) and polypropylene (PP) which are molten on the other surface of the aluminum alloy thin film were each co-extruded to a thickness of 40 um, thereby forming a sealant layer having a thickness of 80 um to manufacture a pouch film laminate body.

### Comparative Example 4

On one surface of a AA8021 aluminum (Al) alloy thin film (Manufacturer: SaMa aluminum) having a thickness of 80 um, a nylon film (Product name: Nylon 6, manufacturer: Kolon) having a thickness of 25 um and a polyethylene terephthalate (PET) film (Manufacturer: Kolon) having a thickness of 12 um were laminated in a dry lamination manner using a urethane adhesive to form a base layer. At this time, the urethane adhesive was applied such that the adhesive layer has a thickness of 5 um. Next, acid-modified polypropylene (PPa) and polypropylene (PP) which are molten on the other surface of the aluminum alloy thin film were each co-extruded to a thickness of 30 um, thereby forming a sealant layer having a thickness of 60 um to manufacture a pouch film laminate body.

### Experimental Example 1: Measurement of base layer film tensile strength and elongation

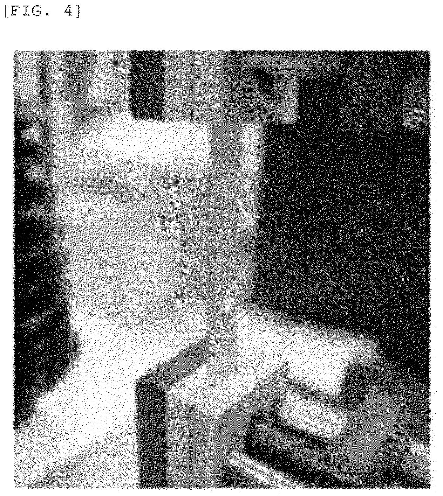

The base layer film (nylon film/adhesive layer/polyethylene terephthalate film laminate body) used in each of Examples 1 to 4 and Comparative Examples 1 to 4 was cut to a width × length of 15 mm × 80 mm to prepare a sample. At this time, the cutting was performed such that the longitudinal direction of the sample coincided with the TD direction of the pouch film laminate body. Thereafter, as illustrated in FIG. 4, the sample was fixed to a UTM device with a 30 mm grip gap, and then the sample was pulled at a tensile speed of 50 mm/min to measure a strength at which breakage occurred as the tensile strength.

In addition, a grip gap at the time of the breakage was divided by the grip gap (30 mm) before the stretching, and then multiplied by 100 to obtain a value, which was evaluated as elongation (%).

The measurement results are shown in [Table 2] below.

### Experimental Example 2: Fatigue test

The pouch film laminate body manufactured in each of Examples 1 to 4 and Comparative Examples 1 to 4 was cut to a size of 266 mm × 240 mm, and mounted on a two-cup molding apparatus provided with a die and a punch, and then drawing molding was performed thereon by lowering the punch with a pressure of 0.5 MPa and a speed of 50 mm/min. At this time, the pouch film laminate bodies of Examples 1 to 4 and Comparative Example 2 were molded to have a molding depth of 9.6 mm, and the pouch film laminate bodies of Comparative Example 1 and Comparative Example 3 were molded to a limit molding depth of 7.0 mm at which cracks are not generated.

Meanwhile, the mold conditions of the above two-cup molding apparatus are as shown in [Table 1] above.

Thereafter, the two-cup molded pouch film laminate was cut to a size of 80 mm in length × 15 mm in width to prepare a measurement sample. The cutting was performed such that the longitudinal direction of the sample coincided with the TD direction of the pouch film laminate body. FIG. 4 illustrates the cutting position (box region) of the two-cup molded pouch film laminate. Next, the sample was fixed to the UTM device with a 30 mm grip gap, and after setting the lower force to 100 N and the higher force to 150 N, a force was repeatedly applied to measure the number of times the force was applied until the sample broke. The measurement results are shown in [Table 2] below.

### Experimental Example 3: Puncture test

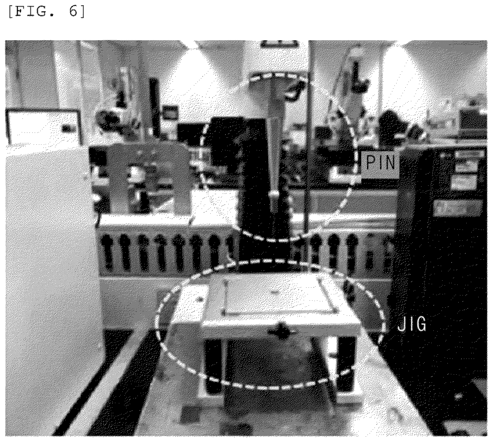

The pouch film laminate body manufactured in each of Examples 1 to 4 and Comparative Examples 1 to 4 was cut to a size of 90 mm in width × 100 mm in length to prepare a measurement sample. Thereafter, the sample was inserted into a jig of a puncture strength tester illustrated in FIG. 6, and forces respectively having loads of 20 N and 22 N were repeatedly applied to the sample using a pin having a diameter of 1.0 mm and a tip curvature of 0.5 mm to measure the number of times the forces were applied until the sample was perforated.

In addition, the puncture strength of each sample was measured by dropping the pin onto the sample while varying the falling load of the pin.

The measurement results are shown in [Table 2] below.

**[Table 2]**

| | | Examp le 1 | Examp le 2 | Examp le 3 | Examp le 4 | Compa rativ e Examp le 1 | Compa rativ e Examp le 2 | Compa rativ e Examp le 3 | Compa rativ e Examp le 4 |
|---|---|---|---|---|---|---|---|---|---|
| Thickness of metal layer (µm) | | 80 | 80 | 60 | 60 | 40 | 60 | 40 | 80 |
| Base layer | TD directio n tensile strength (kgf/15 mm) | 13.0 | 10.6 | 13.0 | 10.6 | 9.6 | 9.6 | 13.0 | 21.2 |
| | TD directio n elongati on (%) | 231 | 175 | 231 | 175 | 236.5 | 236.5 | 231 | 96 |
| Molding depth (mm) | | 9.6 | 9.6 | 9.6 | 9.6 | 7.0 | 9.6 | 7.0 | 7.0 |
| Fatigue test (times) | | >9999 | 6200 | 3550 | 2500 | 235 | 1500 | 255 | 4000 |
| Punct ure cycle (time s) | 20N | >250 | >250 | >250 | >250 | 41 | 241 | 70 | >250 |
| | 22N | >250 | 199 | 214 | 179 | 8 | 142 | 11 | 198 |
| Puncture strength (N) | | 36.9 | 38.8 | 34.7 | 35.8 | 24.6 | 30.1 | 26.2 | 39.1 |

Through [Table 2] above, it can be confirmed that in the case of Examples 1 to 4, in which the thickness of the metal layer and the TD direction tensile strength and elongation of the base layer satisfy the ranges of the present invention, the fatigue test, the puncture cycle, and the puncture strength measurement results are significantly superior to those of Comparative Examples 1 to 3. Meanwhile, in the case of Comparative Example 4, in which the base layer with a high TD direction tensile strength and a low elongation was used, the puncture strength and the puncture cycle properties were excellent, but the moldability was poor, and the fatigue test result was inferior to those of Examples 1 and 2 in which the metal layer of the same thickness was used. Therefore, when a battery case is manufactured using each of the pouch film laminate bodies of Examples 1 to 4, there may be an effect of significantly improving resistance to external stress while maintaining excellent moldability.

### <Description of symbols>

1: Pouch film laminate body
10: Base layer
20: Gas barrier layer
30: Sealant layer
16a, 16b: Adhesive layers
100: Battery case
110: Lower case
120: Upper case
110a, 110b: Cup portion
130: Bridge

## Claims

1. A pouch film laminate body comprising a gas barrier layer, a base layer disposed on one surface of the gas barrier layer, and a sealant layer disposed on the other surface of the gas barrier layer, wherein:
the gas barrier layer has a thickness of 60 µm or greater; and
the base layer has a tensile strength of 10 kgf/15 mm to 20 kgf/15 mm in a TD direction, and has an elongation of 150% to 235% in the TD direction.

2. The pouch film laminate body of claim 1, wherein when a force with a load of 100 N and 150 N is repeatedly applied to a sample prepared by subjecting the pouch film laminate body to two-cup molding to a molding depth of 9.6 mm, and then cutting the pouch film laminate body to a size of 15 mm × 80 mm, the number of times the force has been applied until breakage occurs is 2000 times or more.

3. The pouch film laminate body of claim 1, wherein when a sample prepared by cutting the pouch film laminate body to a size of 90 mm × 100 mm is repeatedly pierced with a 20 N load using a pin having a diameter of 1.0 mm, the number of times the force has been applied until perforation occurs is 250 times or more.

4. The pouch film laminate body of claim 1, wherein when a sample prepared by cutting the pouch film laminate body to a size of 90 mm × 100 mm is repeatedly pierced with a 22 N load using a pin having a diameter of 1.0 mm, the number of times the force has been applied until perforation occurs is 150 times or more.

5. The pouch film laminate body of claim 1, wherein the gas barrier layer has a thickness of 60 um to 100 um.

6. The pouch film laminate body of claim 1, wherein the base layer has a tensile strength of 10 kgf/15 mm to 18 kgf/15 mm in the TD direction.

7. The pouch film laminate body of claim 1, wherein the base layer has an elongation of 170% to 235% in the TD direction.

8. The pouch film laminate body of claim 1, wherein the base layer has a laminate structure of a polyethylene terephthalate film and a nylon film.

9. The pouch film laminate body of claim 8, wherein:
the polyethylene terephthalate film has a thickness of 5 um to 20 um; and
the nylon film has a thickness of 20 um to 30 µm.

10. The pouch film laminate body of claim 1, wherein the gas barrier layer comprises an aluminum alloy thin film.

11. The pouch film laminate body of claim 10, wherein the aluminum alloy thin film comprises 1.2 wt% to 1.7 wt% of iron.

12. The pouch film laminate body of claim 10, wherein the aluminum alloy thin film has a grain size of 10 um to 13 µm.

13. The pouch film laminate body of claim 1, wherein the sealant layer has a thickness of 60 um to 100 µm.

14. The pouch film laminate body of claim 1, wherein the sealant layer comprises polypropylene, cast polypropylene, acid-modified polypropylene, a polypropylene-butylene-ethylene copolymer, or a combination thereof.

15. A battery case manufactured by drawing molding the pouch film laminate body of any one of claim 1 to claim 14.
